# EUROPEAN PATENT APPLICATION

(11) **EP 4 494 860 A1**
(43) Date of publication of application: **22.01.2025**
(21) Application number: 22932266.4
(22) Date of filing: 27.06.2022
(51) Int. Cl.: B32B 1/08, B32B 25/08, B32B 27/30, F16L 11/04

(54) **TUBE**

(30) Priority: 18.03.2022 JP 2022044218
(71) Applicant: Toyox Co., Ltd., Kurobe-shi Toyama 938-8585 (JP)
(72) Inventor: KONISHI Takumi, Kurobe-shi, Toyama 938-8585 (JP); NUMATA Kenichi, Kurobe-shi, Toyama 938-8585 (JP)
(74) Representative: v. Bezold & Partner Patentanwälte - PartG mbB
(86) International application number: PCT/JP2022/025536
(87) International publication number: WO 2023/176000

(57) **Abstract**

This tube is an elongated object having longitudinally constant shape with a uniform wall thickness, preventing local concentration of load during use. The tube is highly durable and stabilizes discharging when used in a peristaltic pump or the like. This tube includes a flow passage 12 penetrating inside longitudinally and a resin section 13 surrounding the flow passage. The resin section is a laminate in which expanded polytetrafluoroethylene layers 16 having voids impregnated with elastomer and elastomer layers 18 each being made from at least one type of elastomer for bonding the polytetrafluoroethylene layers are alternately laminated radially in the flow passage. An average of wall thicknesses of the resin section in at least four mutually intersecting radial directions of the flow passage, a wall thickness ratio calculated from wall thicknesses in opposing directions of the four directions, and the number of laminated polytetrafluoroethylene layers and elastomer layers satisfy predetermined conditions.

## Description

### Technical Field

This disclosure relates to a flexible tube used for a peristaltic pump or the like that transports a fluid.

### Background Art

Conventionally, peristaltic pumps have been used for feeding a fluid or transporting a fixed amount of fluid in biomedical, pharmaceutical, and chemical fields or the like, and flexible tubes are used in such peristaltic pumps. Mechanical resistance to repeated flexing movement is required for such tubes and various types of such tubes have been fabricated.

For example, a composite elastomer structure having flex resistance disclosed in Patent Literature 1 is a composite material including expanded polytetrafluoroethylene layers, the polytetrafluoroethylene layers being impregnated with liquid elastomer and cured, and the impregnated polytetrafluoroethylene layers are bonded via an elastomer layer. A method for fabricating this composite elastomer structure includes applying liquid elastomer to an expanded polytetrafluoroethylene film in a thin layer to impregnate the expanded polytetrafluoroethylene film with liquid elastomer and winding the film around a shaft until a thickness of the wound film reaches a predetermined thickness. After curing the wound film, the shaft is pulled out and the tube is obtained. By winding the film, polytetrafluoroethylene layers and elastomer layers are alternately laminated, and growth of cracks can be prevented. This structure produces an effect of preventing generation of a hole or leakage due to cracks or tears caused by repeated flexing movement and increases durability.

### Citation List

### Patent Literature

Patent Literature 1: Japanese Patent No. 43273 52

### Summary of Invention

### Technical Problem

Durability of the conventional tube as described above is reduced when a wall thickness of the tube is not uniform and there is an uneven thickness or there are wrinkles or bubbles between the laminated expanded polytetrafluoroethylene layers, due to occurrence of a twisting force or local concentration of forces when the tube is repeatedly occluded by a roller of the peristaltic pump. In such a case, bonding strength between the expanded polytetrafluoroethylene layers becomes insufficient in some areas. Accordingly, load-sensitive areas are locally generated in the tube, leading to flaking or fracture and reducing the durability life of the tube. If there is an area having a thin wall thickness, the load applied to the area when the tube is occluded is lower, and the load is concentrated at an area having a thick wall thickness. In addition, a twisting force may be applied to the tube when forces are shifted to the thin wall area, and the fracture may occur without showing inherent durability. Furthermore, since the uneven thickness prevents reliable and repeated occlusion of a flow passage in the tube, an amount to be discharged in pumping becomes unstable.

In the background art, with respect to a condition of thickness per layer, there are limits to thicknesses of expanded polytetrafluoroethylene layers and elastomer while there is no limit to uneven thickness for a tube constructed of a plurality of layers, which is a problem in resistance to repeated occlusion. In addition, when the number of turns of the expanded polytetrafluoroethylene layers (the number of laminated layers) is excessive for the wall thickness, the tube gets stiff and loses resilience. In the background art, however, the number of turns is defined to be 31 or more layers, and prevention of excessive lamination is not considered.

In a fabrication process illustrated in the background art described above, an expanded polytetrafluoroethylene film is caused to pass through a gap between two rollers, and liquid elastomer is introduced to the film, which may, however, result in the introduced liquid elastomer becoming thin if the rollers skid. In addition, by causing the film to pass through the gap between the two rollers, the film is stretched, and the thickness of the film changes, which affects the wall thickness of the film while laminating the film. The uneven thickness may be generated when an elastomer is not introduced to the expanded polytetrafluoroethylene layers with the uniform thickness, and prevention of the uneven thickness is not considered.

The present disclosure has been accomplished in view of the problem of the background art described above, and it is an objective of the present disclosure to provide a tube having a uniform wall thickness and high durability, in which load applied to the tube is not locally concentrated during use and discharging is stabilized when the tube is used in a peristaltic pump or the like.

### Solution to Problem

A tube according to the present disclosure is an elongated object having a constant shape in a longitudinal direction and includes a flow passage that penetrates inside the tube in the longitudinal direction and a resin section surrounding the flow passage, the resin section being constructed as a laminate in which expanded polytetrafluoroethylene layers and elastomer layers are alternately laminated in a radial direction of the flow passage, the elastomer layers each bonding the polytetrafluoroethylene layers and being made from at least one type of elastomer, the polytetrafluoroethylene layers having voids that are impregnated with a portion of the elastomer, wherein the tube satisfies, in accordance with an average value calculated from wall thicknesses of the resin section in at least four radial directions of the flow passage intersecting one another, following conditions for a wall thickness ratio calculated from the wall thicknesses in directions opposing each other of the four radial directions and the number of laminated layers of the polytetrafluoroethylene layers and the elastomer layers.

The wall thickness ratio is 1.0 to 1.2 when the average value of the wall thicknesses is 0.5 mm or greater and less than 2.8 mm, and the wall thickness ratio is 1.0 to 1.1 when the average value of the wall thicknesses is 2.8 mm or greater and less than 10.3 mm.

With respect to the number of laminated layers, the number of laminated layers is 5 or greater and less than 35 when the average value of the wall thicknesses is 0.5 mm or greater and less than 1.4 mm, the number of laminated layers is 14 or greater and less than 50 when the average value of the wall thicknesses is 1.4 mm or greater and less than 2.0 mm, the number of laminated layers is 20 or greater and less than 70 when the average value of the wall thicknesses is 2.0 mm or greater and less than 2.8 mm, the number of laminated layers is 28 or greater and less than 100 when the average value of the wall thicknesses is 2.8 mm or greater and less than 4.0 mm, the number of laminated layers is 40 or greater and less than 155 when the average value of the wall thicknesses is 4.0 mm or greater and less than 6.2 mm, the number of laminated layers is 62 or greater and less than 193 when the average value of the wall thicknesses is 6.2 mm or greater and less than 7.7 mm, and the number of laminated layers is 77 or greater and less than 258 when the average value of the wall thicknesses is 7.7 mm or greater and less than 10.3 mm.

In each range of the average values of the wall thicknesses, when the layers are excessively laminated with the number of laminated layers exceeding the defined range, bonding strength of the elastomer becomes insufficient, the expanded polytetrafluoroethylene layers are easily separated from the elastomer layers, and durability of the tube is reduced. When the tube is fabricated with the number of laminated layers less than the defined range, the thickness of the elastomer layer becomes too thick, which may lead to the uneven thickness, and such a tube cannot satisfy the condition for the wall thickness ratio.

The elastomer is made from silicone, urethane, nitrile rubber, styrene-butadiene rubber, chloroprene, phosphazene, fluoroelastomer, perfluoroelastomer, perfluoropolyether elastomer, methyl silicone, phenyl silicone, fluorosilicone, perfluoropolyether elastomer, or a combination thereof, and the elastomer not in a liquid state at room temperature is used after transforming the elastomer into a liquid state by dissolving the elastomer in a solvent.

The elastomer is particularly preferably made from silicone, methyl silicone, phenyl silicone, fluoroelastomer, perfluoroelastomer, or a combination thereof.

An inner periphery of the flow passage in the tube is smooth and satisfies at least one of arithmetic average roughness Ra being 0.01 to 0.80 and a ten point height of roughness profile Rz being 0.01 to 3.00.

### Advantageous Effects of Invention

The tube according to the present disclosure has a uniform wall thickness, deformation of the tube is not varied depending on areas, and the load applied during use is not locally concentrated, and thus, durability of the tube is high. Accordingly, when the tube according to the present disclosure is used in a peristaltic pump or the like, discharging of fluid is stabilized. In addition, since an inner surface of the tube according to the present disclosure has small surface roughness and is smooth, when the tube is squeezed to occlude an internal space and an inner wall of the tube is closely adhered together, friction can be reduced and flaking of fine fragments from the innermost surface can be prevented. Thus, contamination of foreign matter in discharged fluid can be prevented.

### Brief Description of Drawings

FIG. 1 is a sectional view of a tube according to one embodiment of the present disclosure; and
FIG. 2 is a diagrammatic illustration of a process for fabricating the tube according to the embodiment.

### Description of Embodiments

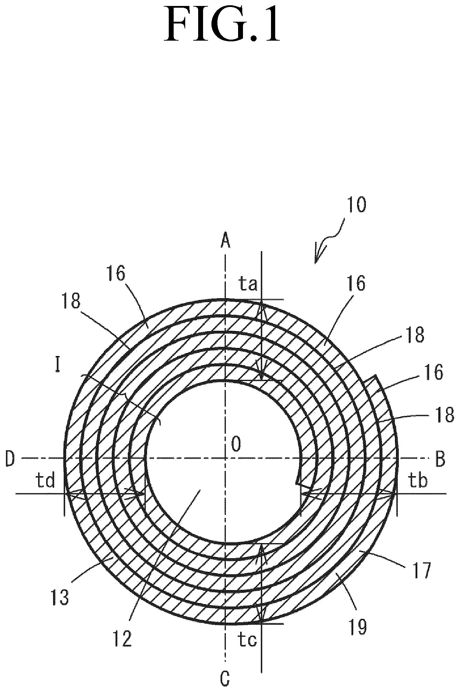

An embodiment of the present disclosure is described below based on the drawings. FIG. 1 illustrates one embodiment of the present disclosure, and a tube 10 according to this embodiment is an elongated object having a constant shape in a longitudinal direction and includes a flow passage 12 having a circular cross section that penetrates inside the tube in the longitudinal direction and a cylindrical resin section 13 surrounding the flow passage 12. FIG. 1 illustrates a structure of the tube substantially perpendicular to the longitudinal direction of the tube 10 in cross section.

The resin section 13 is constructed as a laminate in which polytetrafluoroethylene layers 16 and elastomer layers 18 for bonding the polytetrafluoroethylene layers 16 are alternately laminated in a radial direction of the flow passage 12. The polytetrafluoroethylene layers 16 are helically wound around the flow passage 12 multiple times to be in a tubular shape. The polytetrafluoroethylene layers 16 have many fine voids therein and the voids are impregnated with a portion of the material of the elastomer layers 18.

The polytetrafluoroethylene layers 16 are described. The polytetrafluoroethylene layers 16 are constructed of a polytetrafluoroethylene film 17 made of expanded polytetrafluoroethylene, and the polytetrafluoroethylene film 17 is adjusted by using a reactive lubricant. The reactive lubricant is made from a solvent such as uncured silicone, a desired type of kerosene, naphtha, or mineral spirit. The polytetrafluoroethylene film 17 is fabricated by lubricating, extruding, and expanding fine polytetrafluoroethylene powder. In an expansion process, silicone is cured on site, and a polymer network (IPN) in which polytetrafluoroethylene and silicone elastomer are intertwined with each other is generated. Such an expanded polytetrafluoroethylene film 17 has residual pores, high mechanical strength, and moderate resilience. In this case, the polytetrafluoroethylene film 17 has, for example, a thickness of 30 µm and a pore diameter of 0.1 µm.

Next, the elastomer layers 18 are described. The elastomer layer 18 is made from at least one type of elastomer, and the elastomer is, for example, liquid silicone in an application process and has a hardness of 60 with a durometer type A, viscosity of 25 Pa·S, tensile strength of 7.3 MPa, and elongation of 180%. The elastomer may be, instead of silicone, a fluorinated resin that has excellent chemical resistance and sufficient flex resistance even in the presence of offensive chemical substances (acid, alkali, or solvents such as toluene or MEK). When the viscosity of the elastomer to be applied is high, and voids in the polytetrafluoroethylene layer 16 are not impregnated with the elastomer in the application process, the elastomer is used after dilution with a solvent.

The inner periphery of the flow passage 12 is smoothly finished. Smoothness of the inner periphery of the flow passage 12 satisfies at least one of arithmetic average roughness Ra being 0.01 to 0.80 and a ten point height of roughness profile Rz being 0.01 to 3.00.

The tube 10 satisfies conditions for the wall thickness t and the wall thickness ratio of the resin section 13 and the number of laminated layers I of the polytetrafluoroethylene layers 16 and the elastomer layers 18 listed in Table 1 below. When these conditions are satisfied, a durability performance of the tube is improved. The wall thickness t of the resin section 13 is an average value of wall thicknesses in at least four directions A, B, C, and D that pass through the center 0 illustrated in FIG. 1, in a cross section substantially perpendicular to the longitudinal direction of the tube 10, that is, radial directions of the flow passage 12, for example, an average value of wall thicknesses ta, tb, tc, and td of the resin section 13 in at least four radial directions A, B, C, and D intersecting one another. The wall thickness ratio is an average value of ratios of the wall thicknesses in directions opposing each other of the four directions. The tube 10 of this embodiment is configured and fabricated in such a way that in accordance with the wall thickness t, an optimum wall thickness ratio for the wall thicknesses in directions opposing each other of the four radial directions and an optimum condition for the number of laminated layers I for achieving a high durability performance are satisfied. The optimum conditions for the wall thickness t, the wall thickness ratio, and the number of laminated layers I are listed in Table 1 below.

**[Table 1]**

| WALL THICKNESS t (mm) | WALL THICKNESS RATIO | NUMBER OF LAMINATED LAYERS I |
|---|---|---|
| 0.5 ≦ t < 1.4 | 1.00 ~ 1.22 | 5 ≦ I < 35 |
| 1.4 ≦ t < 2.0 | 1.00 ~ 1.24 | 14 ≦ I < 50 |
| 2.0 ≦ t < 2.8 | 1.00 ~ 1.16 | 20 ≦ I < 70 |
| 2.8 ≦ t < 4.0 | 1.00 ~ 1.11 | 28 ≦ I < 100 |
| 4.0 ≦ t < 6.2 | 1.00 ~ 1.14 | 40 ≦ I < 155 |
| 6.2 ≦ t < 7.7 | 1.00 ~ 1.13 | 62 ≦ I < 193 |
| 7.7 ≦ t < 10.3 | 1.00 ~ 1.10 | 77 ≦ I < 258 |

Among the wall thickness t, the wall thickness ratio, and the number of laminated layers I, with respect to the wall thickness ratio, the second places after the decimal point of the values in Table 1 are rounded off in consideration of acceptable errors. As a result, the preferable conditions for achieving high durability are described below for the wall thickness, the wall thickness ratio, and the number of laminated layers I. The wall thickness ratio is 1.0 to 1.2 when the average value of the wall thicknesses t is 0.5 mm or greater and less than 2.8 mm and the wall thickness ratio is 1.0 to 1.1 when the average value of the wall thicknesses t is 2.8 mm or greater and less than 10.3 mm. The conditions for the number of laminated layers I are listed in Table 1.

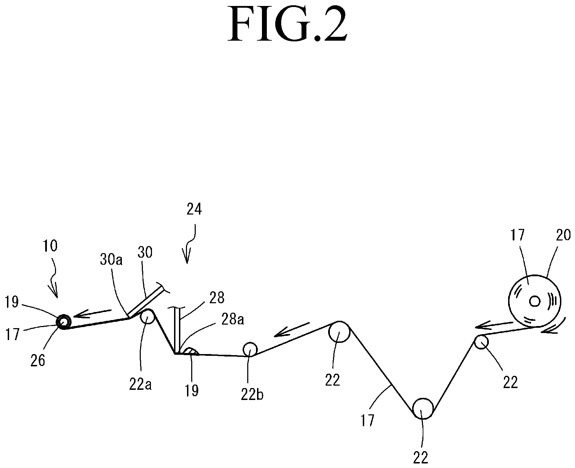

Next, a method for fabricating the tube 10 of this embodiment is described based on FIG. 2. This fabrication method is for fabricating the tube 10 in which the conditions for the wall thickness t, the wall thickness ratio, and the number of laminated layers I are within the optimum ranges listed in Table 1 for achieving a high durability performance.

First, the polytetrafluoroethylene film 17 that is to be processed into the polytetrafluoroethylene layer 16 is pulled out from a roll of an original material 20, guided by film supporting rollers 22, and transferred to an application process 24 in which liquid elastomer 19 that is to serve as the elastomer layer 18 is applied on the polytetrafluoroethylene film 17. In the application process 24, the liquid elastomer 19 is applied on the polytetrafluoroethylene film 17 in a thin layer, and the polytetrafluoroethylene film 17 impregnated with the liquid elastomer 19 is helically wound around a wind-up shaft 26.

The wind-up shaft 26 has a circular cross-sectional shape that matches the shape of the flow passage 12. The wind-up shaft 26 is coated with fluororesin in order to facilitate separation from the polytetrafluoroethylene film 17. Since a surface profile of the shaft 26 is transferred to the inner surface of the tube, a tube having a smooth inner surface can be achieved by having a surface of the shaft 26 finished as smoothly as possible or cladding the shaft with a thermally contractive fluororesin tube. Surface roughness of the inner periphery of the flow passage 12 of the tube 10 satisfies at least one of two conditions, that is, arithmetic average roughness Ra being 0.01 to 0.07 and a ten point height of roughness profile Rz being 0.01 to 0.3 as a preferred range.

The polytetrafluoroethylene film 17 wound up around the wind-up shaft 26 is heated to promote cross-linking reaction of the liquid elastomer 19, which causes layers of polytetrafluoroethylene film 17 to be bonded, and as a result, a laminate is constructed in which the polytetrafluoroethylene layers 16 and the elastomer layers 18 are alternately laminated. Heating is performed, for example, by heating the laminate put into an oven. Then, the wind-up shaft 26 is pulled out and the flow passage 12 is shaped, the tube 10 is thus completed.

The application process 24 in which the liquid elastomer 19 is applied is performed near a film supporting roller 22a immediately anterior to the wind-up shaft 26. Now, an apparatus for the application process 24 is described first.

A first blade 28 for scraping the liquid elastomer 19 to achieve a uniform thickness is provided upstream of the film supporting roller 22a and between the film supporting roller 22a and a film supporting roller 22b located upstream of the film supporting roller 22a. The first blade 28 is pressed onto an upper face of the polytetrafluoroethylene film 17 from above substantially perpendicularly to the upper face of the polytetrafluoroethylene film 17. A lower end 28a of the first blade 28 pressed onto the upper face of the polytetrafluoroethylene film 17 is located at a position lower than the film supporting roller 22a, and pushes the polytetrafluoroethylene film 17 downward below the film supporting roller 22a. The film supporting roller 22b located upstream of the film supporting roller 22a is located at a position lower than the film supporting roller 22a and at a height approximately the same as that of the lower end 28a of the first blade 28. Between the film supporting roller 22b and the first blade 28, the polytetrafluoroethylene film 17 is transferred substantially horizontally.

Between the first blade 28 and the film supporting roller 22b, an unillustrated liquid elastomer feeder is provided, which feeds the liquid elastomer 19 on the upper face of the polytetrafluoroethylene film 17.

A second blade 30 for further scraping the liquid elastomer 19 to achieve more uniform thickness is provided downstream of the film supporting roller 22a and between the film supporting roller 22a and the wind-up shaft 26, and the second blade 30 is pressed onto the upper face of the polytetrafluoroethylene film 17 from above the upper face of the polytetrafluoroethylene film 17. The second blade 30 is slanted in such a way that a lower end 30a thereof that comes into contact with the polytetrafluoroethylene film 17 is directed downstream. The lower end 30a of the second blade 30 is located at a position a little lower than an upper end of the film supporting roller 22a, and pushes the polytetrafluoroethylene film 17 downward a little below the upper end of the film supporting roller 22a. The wind-up shaft 26 downstream of the second blade 30 is located at a position a little below the lower end 30a of the second blade 30, and the polytetrafluoroethylene film 17 is transferred downstream obliquely downward between the second blade 30 and the wind-up shaft 26.

Next, the application process 24 is described. The liquid elastomer 19 is fed by the unillustrated liquid elastomer feeder on the upper face of the polytetrafluoroethylene film 17 that is transferred in contact with the film supporting roller 22b, and the liquid elastomer 19 is brought into contact with the first blade 28 and an excess amount thereof is scraped by the first blade 28 to achieve a uniform thickness. The polytetrafluoroethylene film 17 then passes the film supporting roller 22a, and the liquid elastomer 19 is further brought into contact with the second blade 30 and an excess amount thereof is scraped again to achieve a uniform thickness. With the first blade 28 and the second blade 30, the liquid elastomer 19 can be applied with the uniform thickness, and at the same time, fine pores in the polytetrafluoroethylene film 17 can be reliably impregnated with the liquid elastomer 19.

The tube 10 of this embodiment enables, among the conditions for the wall thickness t, the wall thickness ratio, and the number of laminated layers I of the resin section 13, the wall thickness ratio to be within a narrow and constant range, thereby stabilizing the durability performance and improving durability. In addition, when the wall thickness t is equal to or greater than 2.8 mm that serves as a threshold, by controlling the wall thickness ratio within a relatively narrow range, an absolute value of variation of the wall thickness is limited, and durability of the tube 10 is improved even if the tube 10 has a relatively thick wall thickness t. Furthermore, by setting the number of laminated layers I in the preferred range described above, an even higher durability performance can be achieved. In other words, by configuring the wall thickness of the tube 10 to be relatively uniform within a predetermined range in accordance with the conditions described above, deformation of the tube 10 is not varied depending on areas, and the load applied during use is not locally concentrated, and thus, durability of the tube 10 can be improved. Thus, when the tube 10 is used in a peristaltic pump, discharging of fluid is stabilized. Furthermore, by configuring the wall thickness to be uniform within the predetermined range, variation in durability of the tube 10 caused by a direction of mounting the tube 10 to the peristaltic pump can be prevented.

In addition, since the inner surface of the tube 10 of this embodiment has small surface roughness and is smooth, when the tube is squeezed to occlude an internal space and an inner wall of the tube is closely adhered together, friction is reduced and flaking of fine fragments from the innermost surface can be prevented. Thus, contamination of foreign matter in a fluid such as discharged liquid can be prevented. The tube 10 can be easily fabricated by applying the liquid elastomer 19 on the polytetrafluoroethylene film 17; in the application process 24 for applying the liquid elastomer 19, the liquid elastomer 19 is brought into contact twice, once each with the first blade 28 and the second blade 30 and scraped, which enables the thickness to be uniform; voids in the polytetrafluoroethylene film 17 can be reliably impregnated with the liquid elastomer 19; thus, the tube 10 that satisfies the optimum conditions for achieving a high durability performance can be fabricated.

The tube according to the present disclosure is not limited to the one according to the embodiment described above, and the method for fabricating the polytetrafluoroethylene film that is to be processed into the polytetrafluoroethylene layer may be different from that described above. The material of the elastomer layers may be different from those described above. The number or the locations of the film supporting rollers or the like in the fabrication process, arrangement of the application process, or the like may be appropriately modified. The length of the tube in the longitudinal direction may be freely set, and the tube may be used in various applications.

### Reference Signs List

- 10: Tube

- 12: Flow passage
- 13: Resin section
- 16: Polytetrafluoroethylene layer
- 17: Polytetrafluoroethylene film
- 18: Elastomer layer
- 19: Liquid elastomer

## Claims

1. A tube being an elongated object having a constant shape in a longitudinal direction and including a flow passage that penetrates inside the tube in the longitudinal direction and a resin section surrounding the flow passage, wherein
the resin section is constructed as a laminate in which expanded polytetrafluoroethylene layers and elastomer layers are alternately laminated in a radial direction of the flow passage, the elastomer layers each bonding the polytetrafluoroethylene layers and being made from at least one type of elastomer, and the polytetrafluoroethylene layers having voids that are impregnated with a portion of the elastomer,
the tube satisfies, in accordance with an average value calculated from wall thicknesses of the resin section in at least four radial directions of the flow passage intersecting one another, following conditions for a wall thickness ratio calculated from the wall thicknesses in directions opposing each other of the four radial directions and the number of laminated layers of the polytetrafluoroethylene layers and the elastomer layers:
the wall thickness ratio being 1.0 to 1.2 when the average value of the wall thicknesses is 0.5 mm or greater and less than 2.8 mm and the wall thickness ratio being 1.0 to 1.1 when the average value of the wall thicknesses is 2.8 mm or greater and less than 10.3 mm, and
with respect to the number of laminated layers,
the number of laminated layers being 5 or greater and less than 35 when the average value of the wall thicknesses is 0.5 mm or greater and less than 1.4 mm,
the number of laminated layers being 14 or greater and less than 50 when the average value of the wall thicknesses is 1.4 mm or greater and less than 2.0 mm,
the number of laminated layers being 20 or greater and less than 70 when the average value of the wall thicknesses is 2.0 mm or greater and less than 2.8 mm,
the number of laminated layers being 28 or greater and less than 100 when the average value of the wall thicknesses is 2.8 mm or greater and less than 4.0 mm,
the number of laminated layers being 40 or greater and less than 155 when the average value of the wall thicknesses is 4.0 mm or greater and less than 6.2 mm,
the number of laminated layers being 62 or greater and less than 193 when the average value of the wall thicknesses is 6.2 mm or greater and less than 7.7 mm, and
the number of laminated layers being 77 or greater and less than 258 when the average value of the wall thicknesses is 7.7 mm or greater and less than 10.3 mm.

2. The tube according to claim 1, wherein the elastomer is made from silicone, urethane, nitrile rubber, styrene-butadiene rubber, chloroprene, phosphazene, perfluoropolyether elastomer, perfluoropolyether elastomer, or a combination thereof.

3. The tube according to claim 1, wherein the elastomer is made from methyl silicone, phenyl silicone, or a combination thereof.

4. The tube according to claim 1, wherein the elastomer is made from fluoroelastomer, perfluoroelastomer, or a combination thereof.

5. The tube according to claim 1, wherein an inner periphery of the flow passage in the tube is smooth.

6. The tube according to claim 5, wherein the inner periphery of the flow passage in the tube satisfies arithmetic average roughness Ra being 0.01 to 0.80 and/or a ten point height of roughness profile Rz being 0.01 to 3.00.
